# EUROPEAN PATENT APPLICATION

(11) **EP 0 649 694 A1**
(43) Date of publication of application: **26.04.1995**
(21) Application number: 94103831.7
(22) Date of filing: 12.03.1994
(51) Int. Cl.: B23B 51/10

(54) **Tool to trim cut rims of plastic tubes having various diameter**

(30) Priority: 21.10.1993 IT PZ930004 U
(71) Applicant: I.CO.MA.R. s.n.c., I-85050 Tito Scalo (PZ) (IT)
(72) Inventor: Salvatore, Giuseppe Rocco, S. Angelo le Fratte (PZ) (IT)
(74) Representative: Russo, Saverio, Dott. Ing.

(57) **Abstract**

The tool is suitable for eliminating burrs from the inner and outer surfaces of circular cut rims of plastic tubes.

It is a manually operated tool which may trim cut rims of tubes of various diameter.

The tool, cylindrical in shape, includes cylindrical sectors 3, which form coaxial cylindrical intespaces 4 where tubes, of corresponding diameter, may be inserted and trimmed and bevelled by two pairs of cutting edges (6e) of a blade 6.

The tool may be used from both ends.

## Description

The invention consists in a manual tool to eliminate burrs from the inner and outer surfaces of circular cut rims of plastic tubes in PP, PVC, PE ecc., due to cutting by small saws or other tools.

More in particular, it consists in a manually operated tool to eliminate burrs from cut rims of plastic tubes and to create, on the said cut rims, an indispensable bevelling in order to obtain a sufficient water-tight seal when connecting two tubes.

Currently, in order to simultaneously trim and flare the inner and outer surfaces of cut rims of plastic tubes, assemblers use manual tools which permit trimming only of single diameter tubes.

One of these such tools is formed by a cylindrical body, at the bottom of which are two independent blades, diametrically opposed, fitted so as to cause the trimming of the inner and outer parts respectively, of the cut rim of the tube, by means of a rotation of the tool around the cut rim of the tube or vice versa.

The main drawback of the said tool lies in the impossibility to use it for tubes of varying diameters and the necessity to mount two independent blades to trim, simultaneously the outer and inner parts respectively, of the cut rim of the tube.

This requires a set of tools of various sizes and, consequently, causes greater encumbrance and weight and extra working time to trim and flare tubes of various diameters.

The tool, in accordance with the invention, is intended to remedy the above mentioned drawbacks and particularly, those with which, on site, assemblers of hydraulic plants, are faced.

For such purposes the invention, as claimed, solves the problem of the application of the tool to trim plastic tubes of various diameters.

The tool of cylindrical shape, includes cylindrical sectors which form coaxial cylindrical interspaces, in each of which a tube of various diameters may be inserted and the cut rim forced to be scraped, and consequently trimmed and bevelled, by two pairs of cutting edges of a sole blade 6, diametrically opposed and applied at the inlet of each of the said cylindrical interspaces.

One way of carrying out the invention is described in detail below with reference to drawings which illustrate only one specific embodiment, in which:-
fig. 1, a perspective view of the tool;
fig. 2, the circular plate (without the cylindrical sectors) which divides the cylindrical external surface of the tool in two parts;

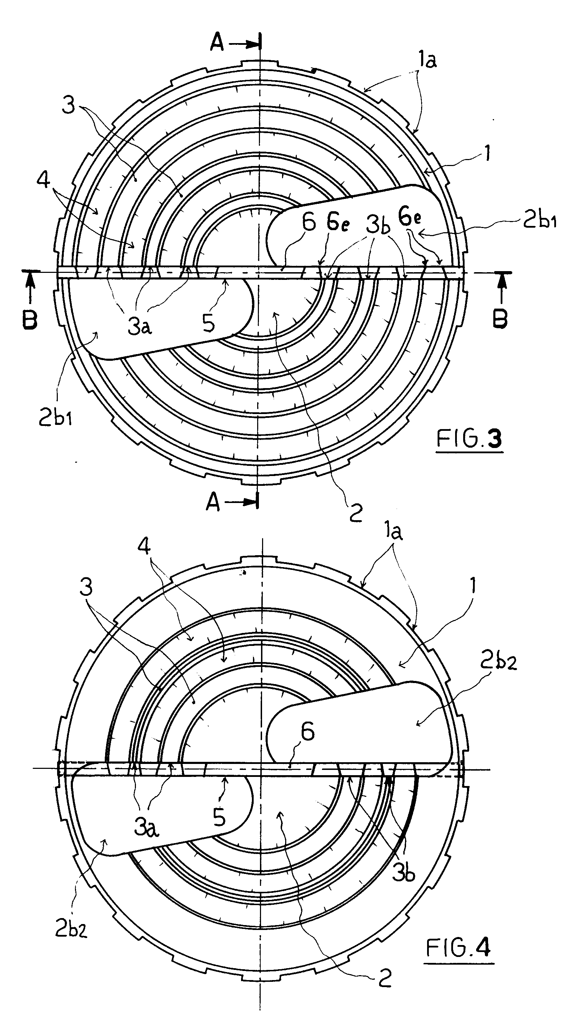

fig. 3, the tool from one end;
fig. 4, the tool from the opposite end;
fig. 5, section AA of the tool;
fig. 6, section BB of the tool;
fig. 7, the blade with trapezoidal teeth each with cutting edges and the top of the same teeth;
fig. 8, the placement of the teeth of the blade in front of the inlets in the interspaces between each couple of cylindrical sectors.

The tool consists in a hollow cylindrical body 1 in alluminium or other similar material, in which the lateral surface is fitted with longitudinal grooves in order to facilitate holding.

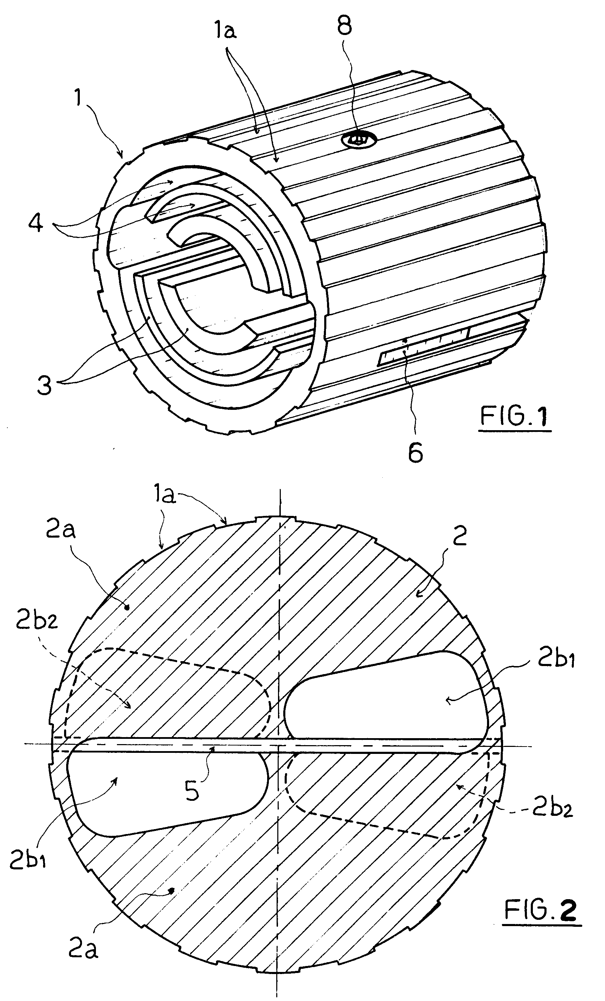

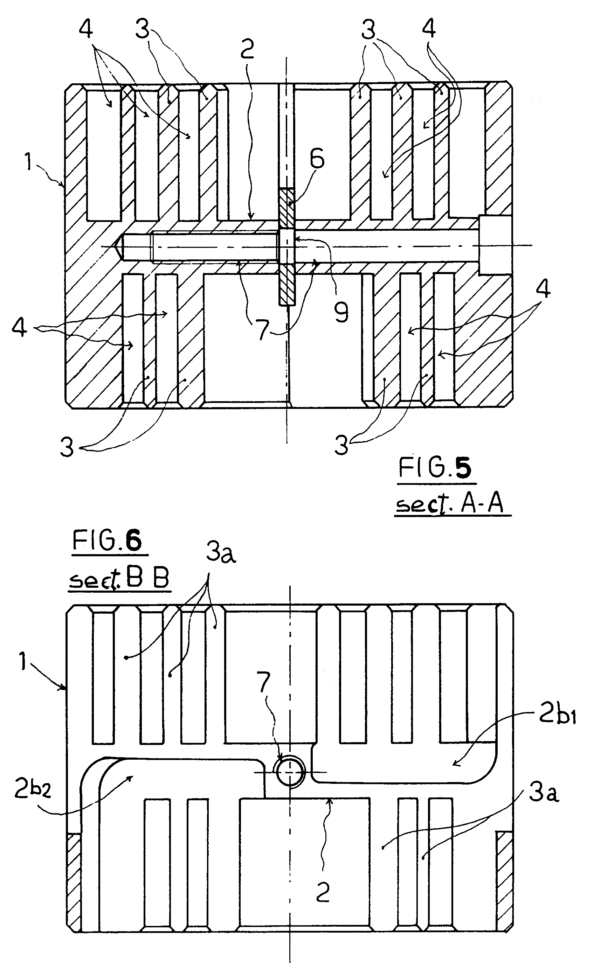

The said cylindrical body is subdivided, normally at its axis, in two cylindrical parts, by a circular plate 2, which, as illustrated in figures 2, 5 and 6, is formed by one part 2a, of double thickness compared to parts 2b1 and 2b2, upon which are realized two pairs of small cavities, respectively on both opposite surfaces of the plate, for gathering burrs and cuttings deriving from trimming.

The plate 2 incorporates, on each of the two sides, two sets of cylindrical sectors 3 of different diameter, diametrically opposed and concentric to the central axis of the cylinder 1.

The diametrically opposed sectors 3 of the same diameter are incorporated to the plate 2 so that the surfaces of borders 3a and 3b make contact with a diametral slot 5 into which a blade 6 fitted with teeth 6a is inserted.

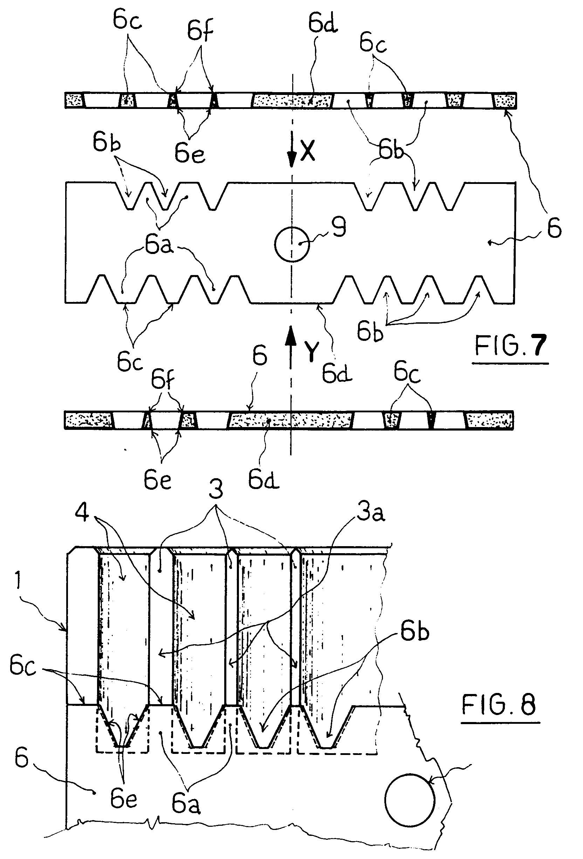

The corners 6e of each tooth 6a act as cutting edges of the trapezoidal teeth 6a, see fig. 7, and partially obstruct the rectangular inlet through which access is gained to the interspace 4 formed by the cylindrical sectors 3.

The top 6c of the teeth 6a, is also trapezoidal in form, while the two opposite central borders 6d of the blade 6, are flat and parallelogram in form, see fig. 7.

The trapezoidal surfaces 6c at the top of the teeth of the blade 6, as illustrated in figure 7, make contact at the shortest side with the transversal surfaces 3a and 3b of the circular sectors 3, so that the trapezoidal cavities 6b, formed by the teeth 6a, are smaller at the part where the rim of the tube, rotating in a clockwise direction, must enter into the corresponding interspace 4, scraping against the cutting edges, and larger in the contact zone with the surfaces 3a and 3b of the circular sector.

The rim of the tube which turns in each cylindrical space 4, rotating in the due sense (in the illustrated embodiment, in the clockwise direction), scrapes, at the same time, against the corners 6e of the two cavities 6b of the blade 6, diametrically and symmetrically opposed, in respect to the centerline of the blade, in the sense that it meets simultaneously the corner edges 6e, of two symmetrical cavities, which carry out the trimming action.

The corners 6f, opposite to those of 6e, form a wider inlet and, consequently, do not act as cutting edges when the tube is turned in an anti-clockwise direction.

In figure 8 one may note the position of the teeth placed upon the surfaces 3a of the circular sectors, observed from the smallest part of the cavity 6b.

The blade 6 becomes blocked in the diametral slot 5 by means of a threaded pin 8 inserted into the threaded hole 7 of the cylindrical body; for this purpose, the blade is fitted with a circular hole 9 through which the pin passes.

## Claims

1. " Tool to trim cut rims of plastic tubes having different diameter", comprising a hollow cylinder (1) and cutting edges, characterized by the fact that the hollow cylinder is subdivided in two equal cylindrical parts by a circular plate, which forms part of the same cylinder, so as to form two separate cylindrical cavities, the same plate incorporating, on both opposed sides, two equal and symmetrical sets of cylindrical sectors (3), of different diameter, coaxial to the axis of the cylinder, and diametrically opposed, which create cylindrical interspaces (4) into which tubes of corresponding diameters may be inserted, to rotate coaxially to the central axis of the same cylinder (1), the transversal surface of the opposite ends (3a) and (3b) of each set of cylindrical sectors (3) being complanar to the walls of a diametral slot (5) into which a blade (6) is introduced, the blade being fitted with two sets of cutting edges (6e) on both longitudinal borders, each set being formed by symmetrical couples of cutting edges diametrically opposed, in respect to the centerline of the same blade, so that the rim of each tube of corresponding diameter may be trimmed, in two diametrically opposed points, by the said couples of symmetrical cutting edges, each pair of the cutting edges delimiting the inlet through which the cut rim of the tube, of corresponding diameter, must pass so as to be scraped by the cutting edges of the blades.

2. Tool to trim as in Claim 1, characterized by the fact that the cutting edges are formed by the corners (6e) of the trapezoidal teeth (6a) which partially obstruct the base of the rectangular inlets through which access is gained to the spaces (4) formed by the circular sectors (3) and that the corners (6e), forming the cutting edges, are opposed to the corners (6f) on contact with the sides (3a) and (3b) of the same circular sectors, the corners (6f) being reciprocaly distanced in order to form an opening passage, greater in area if compared to that formed by the corners (6e), for this purpose the shape of the top (6c) of each tooth being trapezoidal, the corners (6e) passing through the vertexes of the longer base and the corners (6f) through the vertexes of the smaller base of the trapezoidal area of the same top (6c).

3. Tool to trim as in Claims 1 and 2, characterized by the fact that the cutting edges (6e) of the blade (6) carry out their cutting function in a direction normal to the surface of the same blade.

4. Tool to trim as in Claim 1, characterized by the fact that the circular plate (2) forms, on each of the two sides a pair of small cavities (2b1) and (2b2) respectively, to gather burrs and cuttings from trimming, placed between the inlet and outlet of the interspaces (4) formed by the cylindrical sectors (3).

5. Tool to trim as in Claims 1 and 4, characterized by the fact that the inner cylindrical side of the hollow cylinder, in correspondence with the inlet and outlet of the two sets of interspaces (4) of larger diameter, presents arch-shaped longitudinal grooves which extend until the underlying small cavities (2b1) and (2b2).

6. Tool to trim as in Claim 1, characterized by the fact that the blade (6) is fitted, on both longitudinal borders, with trapezoidal teeth, the corners of which form cutting edges suitable to perform their function in the direction normal to the plain of the same blade, the tops (6c) of the same teeth being trapezoidal in shape, the blade being applied in such a way that the corners (6e) of the teeth, passing through the vertexes of the base of the trapezoidal surface (6c), constitute the front cutting edges of the same blade, or rather, those which first meet the cut rim of the tube during its clockwise rotation.
